# EUROPÄISCHE PATENTANMELDUNG

(11) **EP 1 089 190 A2**
(43) Veröffentlichungstag der Anmeldung: **04.04.2001**
(21) Anmeldenummer: 00121128.3
(22) Anmeldetag: 28.09.2000
(51) Int. Cl.: G06F 13/40

(54) **Verfahren zum Betrieb einer Kopplungsschaltung für ein Bussystem sowie entsprechende Schaltung**

(30) Priorität: 29.09.1999 DE 19946547
(71) Anmelder: SIEMENS AKTIENGESELLSCHAFT, 80333 München (DE)
(72) Erfinder: Flach, Manfred, Dipl.-Ing., (FH), 92224 Amberg (DE)

(57) **Zusammenfassung**

Zur Kopplung eines redundanten, mindestens zwei Stränge (6,7) umfassenden Busses mit einem einzigen Strang (8) eines nicht-redundanten Busses (8) ist eine Kopplungsschaltung (1) vorgesehen, die mindestens zwei Eingängen (2,3) zum Anschluss der Stränge (6,7) des redundant ausgelegten Busses (6,7) und mindestens einen weiteren Anschluss (4) als Ausgang zum Anschluss des nicht-redundant ausgelegten Busses (8) aufweist, wobei über den jeweils aktiven Strang (6,7) im Rahmen des für die Busse (6,7;8) definierten Übertragungsprotokolls übertragene Daten und Befehle mittels der Koppelschaltung (1) auch zum Peripheriebus (8) gelangen.

## Beschreibung

Die Erfindung betrifft ein Verfahren zum Betrieb einer Kopplungsschaltung mit mindestens zwei Schaltungseingängen zum Anschluss an jeweils einen von mindestens zwei Stränge eines redundant ausgelegten Systembusses und mit einem Schaltungsausgang zum Anschluss eines nicht-redundant ausgelegten Peripheriebusses. Sie bezieht sich weiter auf und eine nach diesem Verfahren arbeitende Schaltung.

Zusätzlich zu nicht-redundanten oder einfachen Bussystemen sind auch redundante Bussysteme bekannt. Die Redundanz wird dadurch erreicht, dass die wesentlichen Komponenten des Bussystems mehrfach, z.B. doppelt, vorhanden sind. Zumindest die Datenleitung oder der eigentliche Bus, nachfolgend auch als Strang bezeichnet, doppelt vorhanden. Jeder Kommmnikationsteilnehmer des redundanten Bussystems ist an jeden der Stränge angeschlossen. Fällt in einem solchen Bussystem einer der Stränge aufgrund einer Fehlersituation aus, kann die Kommunikation, d. h. die Daten- und Befehlsübertragung, zwischen den Kommunikationsteilnehmern immer noch über den anderen Strang erfolgen.

Ein Kommunikationsteilnehmer, der an ein redundantes Bussystem angeschlossen werden soll, benötigt somit zwei Busanschlüsse zum Anschluss an jeweils einen Strang des redundanten Bussystems. Ein Kommunikationsteilnehmer, der über nur einen Busanschluss verfügt, kann nicht an ein redundantes Bussystem angeschlossen werden, weil eine Daten- und Befehlsübertragung von und zu diesen Kommunikationsteilnehmern nicht möglich ist, wenn derjenige Strang, an den dieser angeschlossen ist, aufgrund einer Fehlersituation ausgefallen ist.

Der Erfindung liegt daher die Aufgabe zugrunde, ein Verfahren anzugeben, um einen Kommunikationsteilnehmer, der aufgrund nur eines Busanschlusses nicht zum Anschluss an ein redundantes Bussystem vorgesehen ist, derart an ein redundantes Bussystem anzuschließen, dass die Daten- und Befehlsübertragung von und zu diesem Kommunikationsteilnehmer entweder über den ersten oder den zweiten der beiden Stränge des redundanten Bussystems erfolgen kann. Des Weiteren soll eine Schaltung zur Kopplung eines mindestens zwei Stränge umfassenden redundanten Busses mit einem einzigen Strang eines nicht-redundanten Busses angegeben werden.

Bezüglich des Verfahrens wird diese Aufgabe erfindungsgemäß gelöst durch die Merkmale des Anspruchs 1. Bezüglich der nach diesem Verfahren arbeitenden Schaltung wird die genannte Aufgabe gelöst durch die Merkmale des Anspruch 2. Vorteilhafte Ausgestaltungen sind Gegenstand der auf diesen rückbezogenen Unteransprüche.

Dazu ist eine Schaltung vorgesehen, die mindestens zwei Schaltungseingänge zum Anschluss an jeweils einen der mindestens zwei Stränge eines redundant ausgelegten Systembusses und mindestens einen Schaltungsausgang zum Anschluss eines nicht-redundant ausgelegten Peripheriebusses umfasst. Jeweils einer der zwei Stränge ist ein aktiver Strang, während der andere der zwei Stränge ein passiver, redundanter Strang des Systembusses ist. Daten oder Befehle, die über den aktiven Strang im Rahmen des für die beiden Busse (System- und Peripheriebus) definierten Übertragungsprotokolls übertragen werden, gelangen mittels der Schaltung auch zum Peripheriebus.

Die Begriffe System- und Peripheriebus wurden zur Unterscheidung der beiden Busse oder Bussegmente gewählt, deren Verbindung oder Kopplung die Schaltung bewirkt. Das als Systembus bezeichnete Bussegment ist redundant ausgelegt und umfasst zwei unabhängige und damit redundante Kommunikations- oder Busstränge. Das als Peripheriebus bezeichnete Bussegment umfasst dagegen nur einen einzigen Strang.

Die Kopplung zwischen redundantem Systembus und nicht-redundantem Peripheriebus erfolgt derart, dass unabhängig davon, welcher der beiden Stränge des Systembusses zu einem bestimmten Zeitpunkt aktiver Strang ist, stets der aktive Strang des Systembusses mit dem einzigen Strang des Peripheriebusses gekoppelt ist. Aktiv ist derjenige Strang, über den eine Daten- oder Befehlsübertragung erfolgt. Die Kopplung bewirkt, dass für Daten- und Befehlsübertragungen der einzige Strang des Peripheriebusses eine Fortsetzung des aktiven Strangs des Systembusses darstellt.

Der mit der Erfindung erzielte Vorteil besteht darin, dass Kommunikationsteilnehmer, die nicht zum Anschluss an einen redundanten Bus vorgesehen oder geeignet sind, quasi mittelbar an einen redundanten Bus anschließbar sind.

Wenn die Schaltung zur Realisierung des erfindungsgemäßen Verfahrens derart ausgeführt ist, dass sie als eigenständiger Kommunikationsteilnehmer am Systembus betreibbar ist, besteht die Möglichkeit, an den Peripheriebus mehr als einen Kommunikationsteilnehmer anzuschließen, die selbst nicht zum Anschluss an den Systembus geeignet sind.

Alternativ ist die Schaltung aber auch in einen Kommunikationsteilnehmer integrierbar. Dann wird für diesen Kommunikationsteilnehmer die Möglichkeit des Anschlusses an den Systembus eröffnet. Mehrere Kommunikationsteilnehmer auf diese Weise an den Systembus anzuschließen erfordert für jeden Kommunikationsteilnehmer eine eigene Schaltung. Der Peripheriebus erstreckt sich dann nur noch innerhalb des Kommunikationsteilnehmers.

Wenn die Schaltung als eigenständiger Kommunikationsteilnehmer ausgeführt ist, ist der Peripheriebus ein geräteexterner Bus, an den eine Anzahl weiterer Kommunikationsteilnehmer anschließbar ist. Für jeden der an den einzigen Strang des Peripheriebusses anzuschließenden Kommunikationsteilnehmer ist dann ein herkömmlicher Busanschluss ausreichend.

Ein Kommunikationsteilnehmer, der an den Peripheriebus angeschlossen oder zum Anschluss an diesen vorgesehen ist, wird im folgenden als Peripheriegerät bezeichnet. Als Peripheriegerät wird auch ein Kommunikationsteilnehmer bezeichnet, in den die Schaltung integriert ist, so dass ein Peripheriegerät mit einem geräteinternen Peripheriebus gegeben ist. Das Peripheriegerät ist z.B. ein Gerät zur Steuerung und/oder Überwachung eines technischen Prozesses, wie es zu Automatisierungszwecken eingesetzt wird.

Ein Peripheriegerät hat z.B. Ein-/Ausgabefunktionalität (Digital-/Analog Ein-/Ausgabe) oder Verarbeitungsfunktionalität (Regeln, Zählen, etc.). Ein Peripheriegerät dient zur Aufnahme von Statusinformationen aus dem technischen Prozess, die zur Steuerung oder Regelung des Prozesses durch eine übergeordnete, ebenfalls an den Bus angeschlossene Einheit erforderlich sind. Es dient alternativ oder zusätzlich auch zur Ausgabe von Steuerbefehlen der übergeordneten Einheit an den technischen Prozess, z.B. zum Ein- oder Ausschalten von Motoren und/oder zum Öffnen oder Schließen von Ventilen. Die übergeordnete Einheit ist z.B. ein Leitrechner oder eine Zentraleinheit einer speicherprogrammierbaren Steuerung.

Die Ausführung, bei der die Schaltung als eigenständiger Kommunikationsteilnehmer ausgebildet ist, bietet den Vorteil, eine Anzahl von Peripheriegeräten in herkömmlicher Weise an den einzigen Strang des Peripheriebusses anschließen zu können. Eine Modifikation der Peripheriegeräte ist nicht erforderlich, denn deren standardmäßiger Busanschluss ist zum Anschluss an den einzigen Strang des Peripheriebusses ausreichend.

Die Ausführung, bei der die Schaltung in das Peripheriegerat integriert ist, erfordert für jedes anzuschließende Peripheriegerät eine eigene Schaltung. Dies bietet den Vorteil, dass im Falle einer Fehlersituation am Peripheriebus nur jeweils ein Peripheriegerät kommunikativ nicht mehr über den Bus erreichbar ist. Dagegen sind bei einer Fehlersituation am geräteexternen Peripheriebus alle hinter oder nach der Fehlerstelle angeschlossenen Peripheriegeräte kommunikativ nicht mehr über den Bus erreichbar.

Vorteilhaft ist die Schaltung modular mit einem ersten und einem zweiten Modul realisiert. Dabei bildet jeweils ein Eingang des ersten Moduls und ein Eingang des zweiten Moduls den ersten bzw. zweiten Schaltungseingang. Ein Ausgang des ersten Moduls und ein Ausgang des zweiten Moduls bilden zusammen den Schaltungsausgang.

Vorteilhafterweise umfasst jedes Modul der Schaltung eine aktivierbare Buskopplung und eine Erkennungsvorrichtung. Die Erkennungsvorrichtung dient zum Erkennen des aktiven Strangs des Systembusses. Die Erkennungsvorrichtung wird dazu z.B. durch einen sogenannten ASIC gebildet, wie er in herkömmlichen Peripheriegeräten zur Busanschaltung vorgesehen ist. Die Erkennungsvorrichtung ermöglicht damit eine Überwachung des auf dem jeweiligen Strang des Systembusses stattfindenden Datenverkehrs. Wenn ein solcher Datenverkehr erkannt wird, steht fest, dass der entsprechende Strang derzeit der aktive Strang des Systembusses ist. Dasjenige Modul der Schaltung, an welches der als aktiv erkannte Strang angeschlossen ist, wird zur Unterscheidung als aktives Modul und das andere Modul entsprechend als passives Modul bezeichnet. Bei Erkennen des aktiven Strangs bewirkt die Erkennungsvorrichtung des aktiven Moduls die Aktivierung der aktivierbaren Buskopplung desselben Moduls. Die Buskopplung ist z.B. ein sogenannter Repeater, der auch zur Verstärkung der übertragenen Signale geeignet ist.

Vorteilhaft sind die Erkennungsvorrichtungen beider Module durch eine Modulkopplung elektrisch und kommunikativ miteinander gekoppelt. Über diese Modulkopplung signalisiert die Erkennungsvorrichtung des aktiven Moduls der Erkennungsvorrichtung des anderen Moduls die Aktivierung der Buskopplung. Dies bewirkt eine Deaktivierung der Buskopplung des anderen Moduls. Damit ist gewährleistet, dass stets nur eine der beiden Buskopplungen der Schaltung, nämlich die des aktiven Moduls, aktiviert ist.

Zweckmäßigerweise ist auch eine Umschaltung durch ein über den aktiven Strang des Systembusses übermitteltes Umschaltsignal möglich, das vor einer Umschaltung vom aktiven Strang auf den redundanten Strang des Systembusses übermittelt wird. Dabei bewirkt die Erkennungsvorrichtung des aktiven Moduls bei Erkennen des Umschaltsignals die Deaktivierung der zugehörigen Buskopplung sowie über die Modulkopplung und die Erkennungsvorrichtung des anderen Moduls die Aktivierung der Buskopplung des anderen Moduls. Als zugehörige Buskopplung wird dabei die Buskopplung des Moduls bezeichnet, das auch die Erkennungsvorrichtung umfasst.

Wird das Umschaltsignal nicht über den aktiven, sondern über den redundanten Strang übermittelt, wird es entsprechend von der Erkennungsvorrichtung des passiven Moduls erkannt. Diese bewirkt dann die Aktivierung der zugehörigen Buskopplung und die Deaktivierung der komplementären Buskopplung, d. h. der Buskopplung des anderen Moduls.

Vorteilhaft ist die Erkennungsvorrichtung geeignet, eine Störung des jeweils anderen Moduls, also z.B. eine Störung der Erkennungsvorrichtung oder der Buskopplung des anderen Moduls, zu erkennen. Dies ist mittels der zwischen den jeweiligen Erkennungsvorrichtungen der beiden Module bestehenden Modulkopplung möglich. Bei Erkennen einer Störung bewirkt die Erkennungsvorrichtung des Moduls mit deaktivierter Buskopplung deren Aktivierung. Die Deaktivierung der Buskopplung des anderen Moduls kann über die Modulkopplung und die Erkennungsvorrichtung dieses anderen Moduls erfolgen.

Vorteilhaft gibt die Schaltung bei Erkennen einer Störung ein Busumschaltsignal ab. Dieses Busumschaltsignal bewirkt für den Systembus, dass der aktive Strang seinen Status als aktiver Strang aufgibt und der andere Strang den Status des aktiven Strangs annimmt. Das Busumschaltsignal wird dazu z.B. von einem an jedem der beiden Stränge des Systembusses vorhandenen Busmaster erkannt. Nach Erkennen des Busumschaltsignals aktiviert oder deaktiviert der Busmaster den zugehörigen Strang des Systembusses, je nachdem, ob der jeweilige Strang beim Empfang des Busumschaltsignals der passive oder aktive Strand des Systembusses war. Zwischen den Busmastern besteht eine der Modulkopplung vergleichbare Busmasterkopplung, über die der Busmaster, der das Busumschaltsignal erkannt hat, dem anderen Busmaster dies signalisiert. Der andere Busmaster aktiviert oder deaktiviert daraufhin entsprechend den anderen Strang des Systembusses.

Die Schaltung ist damit geeignet, sowohl auf eine externe wie auch eine interne Umschaltbedingung entsprechend zu reagieren. Eine externe Umschaltbedingung ist z.B. der Empfang eines Umschaltsignals oder das Erkennen einer Fehlersituation in einem der Stränge des Systembusses. Eine interne Umschaltbedingung ist z.B. eine Fehlersituation der Schaltung selbst.

Ferner wird der Umschaltvorgang auch eingeleitet, wenn erkannt wird, dass auf dem betreffenden redundanten Bussegment, dem jeweiligen Strang des Systembusses, kein Telegrammverkehr, d.h. keine Daten- oder Befehlsübertragung, mehr möglich ist oder stattfindet. Ein Umschaltung erfolgt auch, wenn der angeschlossene Busmaster ausfällt, oder wenn der angeschlossene Busmaster den Ausfall einer übergeordneten Steuerung, z.B. der Zentraleinheit einer speicherprogrammierbaren Steuerung oder eines Leitrechners, signalisiert. Zudem erfolgt eine Umschaltung, wenn die aktive Anschaltung oder das aktive Modul nicht mehr vom zugeordneten Busmaster angesprochen werden kann. Auch erfolgt ein Umschaltung, wenn das aktive Modul ausfällt, bzw. einen internen Fehler erkennt, oder wenn das aktive Modul vom angeschlossenen Busmaster aus dem Datenzyklus genommen wird. Des Weiteren erfolgt eine Umschaltung, wenn die Spannungsversorgung des aktiven Moduls ausfällt, wenn oder die Schaltung von der übergeordneten Steuerung ein entsprechendes Umschaltsignal erhält.

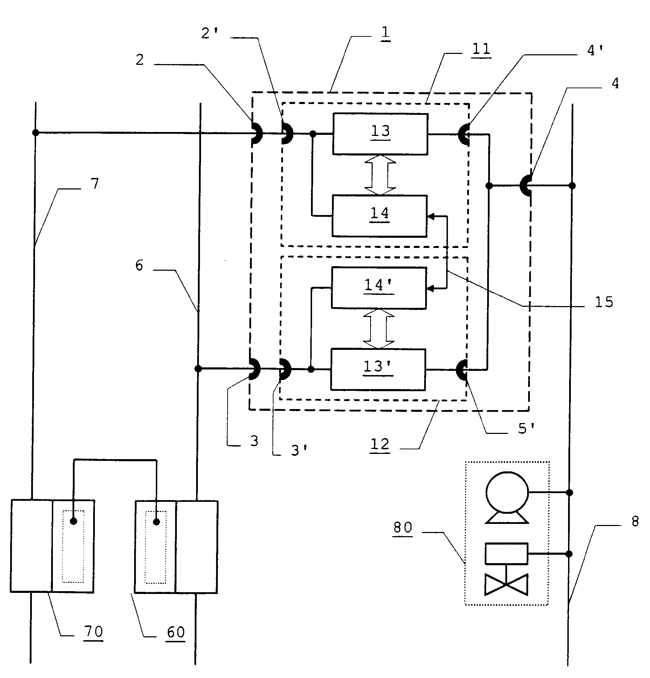

Nachfolgend wird ein Ausführungsbeispiel der Erfindung anhand der Zeichnung näher erläutert. Darin zeigt die einzige Figur eine Kopplungsschaltung zur Ausführung des erfindungsgemäßen Verfahrens.

Die Kopplungsschaltung 1 dient zur Kopplung eines mit redundanten Busses und mit einem nicht-redundanten Bus 8. Der redundante Bus umfasst einen ersten und einen zweiten Strang 6,7. Die beiden Stränge 6,7 werden zusammen auch als Bus oder als Bussegment bezeichnet. Zur Unterscheidung wird der redundante Bus 6,7 als Systembus oder Systembussegment und der nicht-redundanten Bus 8 als Peripheriebus oder Peripheriesegment des gekoppelten Bussystems bezeichnet.

Jeder Strang 6,7 des Systembusses erstreckt sich ausgehend von einem sogenannten Busmaster 60,70. Der Busmaster 60,70 koordiniert die Kommunikation, d. h. den Austausch von Daten und Befehlen über den jeweiligen Strang 6,7 des Systembusses. Zu einem bestimmten Zeitpunkt ist jeweils nur einer der beiden Stränge 6, 7 des Systembusses der sogenannte aktive Strang, d.h. nur über diesen Strang 6,7 erfolgt ein Daten- und Befehlsaustausch unter Kontrolle des jeweiligen Busmasters 60,70. Der andere - passive oder redundante - Strang 6,7 bleibt solange inaktiv, bis eine Umschaltung vom bisher aktiven Busmaster 60,70 auf den bisher passiven Busmaster 60,70 erfolgt.

Der Peripheriebus dient z.B. zum Anschluss von Peripheriegeräten 80, wie sie zur Steuerung oder Überwachung eines (nicht dargestellten) externen technischen Prozesses üblich sind. Exemplarisch sind stellvertretend für die Vielzahl gebräuchlicher Peripheriegeräte 80, deren Anschluss an den Peripheriebus 8 je nach Anwendungsfall vorgesehen sein kann, ein Motor und ein Ventil dargestellt.

Bei den Peripheriegeräten 80 handelt es sich jeweils um Geräte mit nur einem Busanschluss. Ein Anschluss eines derartigen Gerätes 80 an die beiden Stränge 6,7 des Systembusses ist entsprechend nicht möglich. Ein Anschluss eines derartigen Gerätes 80 an nur einen der beiden Stränge 6,7 des Systembusses ist nicht zulässig, weil es über den Systembus kommunikativ nicht mehr erreichbar ist, wenn über diesen Strang 6,7 im Fehlerfall keine Kommunikation mehr möglich ist.

Die Koppelschaltung 1 ermöglicht den quasi mittelbaren Anschluss eines Gerätes 80 mit nur einem Busanschluss an den redundanten Systembus 6,7, indem sie eine Kopplung des Systembusses 6,7 mit dem Peripheriebus 8 bewirkt, an den das Gerät 80 anschließbar ist.

Die Koppelschaltung 1 weist einen ersten und zweiten Schaltungseingang 2,3 zum Anschluss je eines Stranges 6,7 des Systembusses und einen Schaltungsausgang 4 zum Anschluss des einzigen Strangs 8 des Peripheriebusses auf. Intern umfasst die Schaltung 1 zwei identisch aufgebaute Module 11,12. Ein Eingang 2' des ersten Moduls 11 bildet den ersten Schaltungseingang 2 und ein Eingang 3' des zweiten Moduls 12 bildet den zweiten Schaltungseingang 3. Ein Ausgang 4' des ersten Moduls 11 und ein Ausgang 5' des zweiten Moduls 12 bilden zusammen den Schaltungsausgang 4.

Jedes Modul 11, 2 umfasst jeweils eine aktivierbare Buskopplung 13,13' und eine Erkennungsvorrichtung 14,14' zum Erkennen des jeweils aktiven Strangs 6,7. Die Erkennungsvorrichtung 14,14' bewirkt jeweils bei Erkennen des aktiven Strangs 6,7 die Aktivierung der aktivierbaren Buskopplung 13,13' desselben Moduls 11,12. Der aktive Strangs 6, 7 wird als solcher erkannt, wenn derjenige Strang 6,7, mit dem die Erkennungsvorrichtung 14,14' verbunden ist, der derzeit aktive Strang 6,7 ist. Das Modul 11,12, das an den aktiven Strang 6,7 angeschlossen ist, wird zur Unterscheidung als aktives Modul 11,12 bezeichnet.

Die aktivierbare Buskopplung 13, 13' bewirkt eine Auffrischung der über das gekoppelte Bussystem Bus 6,7,8 übertragenen Signale und ist daher z.B. ein sogenannter Repeater 13, 13'. Die Erkennungsvorrichtung 14, 14' ist ein sogenannter Bus- oder Slave-ASIC, also ein integrierter Schaltkreis, der die Funktionalität zum Anschluss eines Gerätes an einen Bus bietet.

Das Modul oder Buskoppelelement 11,12 führt die beiden redundanten Bussegmente oder Stränge 6,7 logisch auf das Bussegment oder den Strang 8 zusammen. Das Buskoppelelement 11,12 empfängt die Telegramme aus einem der redundanten Bussegmente 6,7 und leitet sie in den Strang oder das Bussegment 8 des einfach aufgebauten Busses an die dort angeschlossenen Teilnehmer 80 weiter.

In umgekehrter Richtung werden die Telegramme aus dem einfach aufgebauten Bussegment 8 in das aktive, redundante Bussegment 6,7 des gekoppelten Bussystems 6,7,8 weitergeben. Es erfolgt keine Auswertung der Telegramme, sondern lediglich eine Auffrischung der Signale durch die Buskopplung 13,13'. Wenn festgestellt wird, dass des aktuell aktive Bussegment 6,7 des Systembusses nicht mehr funktionsfähig ist, wird automatisch - ohne Eingriff eines Anwenders - auf das andere redundante Bussegment 6,7 umgeschaltet. Der Betrieb der angeschlossenen Peripheriegeräte 80 wird über das andere redundante Bussegment 6,7 unterbrechungsfrei weitergeführt.

Somit sind ein Verfahren und eine Koppelschaltung 1 zur Kopplung eines redundanten, mindestens zwei Stränge 6,7 umfassenden Busses mit einem einzigen Strang 8 eines nicht-redundanten Busses mittels angegeben, wobei die Koppelschaltung 1 mindestens zwei Eingänge 2,3 zum Anschluss der Stränge 6,7 des redundant ausgelegten Busses und mindestens einen weiteren Anschluss 4 als Ausgang zum Anschluss des nicht-redundant ausgelegten Busses 8 aufweist.

## Patentansprüche

1. Verfahren zum Betrieb einer Kopplungsschaltung (1) mit mindestens zwei Schaltungseingängen (2,3) zum Anschluss an jeweils einen von mindestens zwei Stränge (6,7) eines redundant ausgelegten Systembusses (6,7), und mit einem Schaltungsausgang (4) zum Anschluss eines nicht-redundant ausgelegten Peripheriebusses (8),
- wobei jeweils einer der zwei Stränge (6,7) ein aktiver Strang (6,7) und der andere der zwei Stränge (6,7) ein redundanter Strang (6,7) des Systembusses (6,7) ist, und
- wobei die über den aktiven Strang (6,7) im Rahmen des für die Busse (6,7;8) definierten Übertragungsprotokolls übertragenen Daten und Befehle mittels der Koppelschaltung (1) auch zum Peripheriebus (8) gelangen.

2. Kopplungsschaltung für ein Bussystem (6,7;8), mit einem ersten Modul (11) und einem zweiten Modul (12),
- wobei ein Eingang (2') des ersten Moduls (11) den ersten Schaltungseingang (2) und ein Eingang (3') des zweiten Moduls (12) den zweiten Schaltungseingang (3) bilden, und
- wobei ein Ausgang (4') des ersten Moduls (11) und ein Ausgang (5') des zweiten Moduls (12) zusammen den Schaltungsausgang (4) bilden.

3. Kopplungsschaltung nach Anspruch 2, bei der jedes Modul (11,12) eine aktivierbare Buskopplung (13,13') und zum Erkennen des aktiven Strangs (6,7) eine Erkennungsvorrichtung (14,14') umfasst, die bei Erkennen des aktiven Strangs (6,7) die Aktivierung der Buskopplung (13,13') desselben, aktiven Moduls (11,12) bewirkt.

4. Kopplungsschaltung nach Anspruch 3, bei der die Erkennungsvorrichtungen (11, 12) durch eine Modulkopplung (15) elektrisch und kommunikativ miteinander gekoppelt sind, wobei die Erkennungsvorrichtung (14, 14') des aktiven Moduls (11,12) der Erkennungsvorrichtung des anderen Moduls (11,12) die Aktivierung der Buskopplung (13,13') über die Modulkopplung (15) signalisiert und damit eine Deaktivierung der Buskopplung (13, 13') des anderen Moduls (11, 12) bewirkt.

5. Kopplungsschaltung nach Anspruch 4, bei der die Erkennungsvorrichtung (14,14') des aktiven Moduls (11, 12) bei Erkennen eines über den aktiven Strang (6, 7) des Systembusses (6,7) übermittelten Umschaltsignals die Deaktivierung der Buskopplung (13,13') desselben Moduls (11, 12) sowie über die Modulkopplung (15) und die Erkennungsvorrichtung (14,14') des anderen Moduls (11,12) die Aktivierung der Buskopplung (13,13') des anderen Moduls (11, 12) bewirkt.

6. Kopplungsschaltung nach Anspruch 3, 4 oder 5, bei der die Erkennungsvorrichtung (11,12) geeignet ist, eine Störung des jeweils anderen Moduls (11, 12) über die Modulkopplung (15) zu erkennen, wobei die Erkennungsvorrichtung (11, 12) desjenigen Moduls (11, 12) mit deaktivierter Buskopplung (13,13') bei Erkennen einer Störung deren Aktivierung bewirkt.

7. Kopplungsschaltung nach Anspruch 6, bei der bei Erkennen einer Störung ein abgegebenes Busumschaltsignal im Systembus (6,7) bewirkt, dass der aktive Strang (6, 7) seinen Status als aktiver Strang (6, 7) aufgibt und der andere Streng (6,7) den Status des aktiven Strangs (6, 7) annimmt.

8. Elektrisches Gerät zur Steuerung und/oder Überwachung eines technischen Prozesses mit einer Kopplungsschaltung nach einem der Ansprüche 2 bis 7.
